Europäisches Patentamt

European Patent Office

Office européen des brevets

(11) Publication number: **0 128 003**
A2

# (12) EUROPEAN PATENT APPLICATION

(21) Application number: 84303630.2

(22) Date of filing: 30.05.84

(51) Int. Cl.³: **F 16 K 11/07**
**F 15 B 13/044**

(30) Priority: 01.06.83 GB 8315078

(43) Date of publication of application:
12.12.84 Bulletin 84/50

(84) Designated Contracting States:
DE FR GB IT SE

(71) Applicant: SPERRY LIMITED
Sperry House 78 Portsmouth Road
Cobham, Surrey, KT11 1JZ(GB)

(72) Inventor: Shaw, Charles Anthony
4 Maplehurst Road
Chichester PO19 4QL(GB)

(74) Representative: Singleton, Jeffrey
Eric Potter & Clarkson 5 Market Way Broad Street
Reading Berkshire, RG1 2BN(GB)

(54) Two-stage directional control valves.

(57) A solenoid-operated, two-stage hydraulic spool valve comprising pilot valve means (22) and a main valve (2) with the pilot valve means comprising two control devices (24) associated with respective ends of the spool of the main valve, at least one control device comprising a solenoid and a pilot valve spool, in use each control device being operable physically to move the main valve spool (2) during an initial portion of the movement of the latter from a null position to an offset position in which hydraulic fluid is passed to a load, movement of the main valve spool beyond said initial portion being effected hydraulically on opening of the pilot valve means; the hydraulic spool valve further comprising means (36; 37) for equalising the hydraulic pressure across each control device.

Fig.1.

## TWO-STAGE DIRECTIONAL CONTROL VALVES

This invention relates to two-stage directional control valves and more particularly, to such valves which are solenoid operated.

In known two-stage valves there is usually provided a pilot valve which is used to drive hydraulically a main or second stage valve, the pilot valve being controlled by at least one solenoid. For a given size of solenoid, there is a limit to the force it can exert which in turn limits the size and stroke of the pilot valve. The main or second stage spool cannot be moved when the residual pressure pertaining when the pilot valve is in the null or central position is insufficient to provide pilot pressure to move the main valve by use of the pilot valve spool.

According to the present invention there is provided a solenoid-operated, two-stage hydraulic spool valve comprising pilot valve means and a main valve with the pilot valve means comprising two control devices associated with respective ends of the spool of the main valve, at least one control device comprising a solenoid and a pilot valve spool, in use each control device being operable physically to move the main valve spool during an initial portion of the movement of the latter from a null position to an offset position in which hydraulic fluid is passed to a load, movement of the main valve spool beyond said initial portion being effected hydraulically on opening of the pilot valve means; the hydraulic spool valve further comprising means for equalising the hydraulic pressure across each control device.

Preferably each control device is in the form of a solenoid and associated pilot valve spool although one device may be in the form of a spring offset arrangement.

The or each solenoid, when energised to move the main valve spool, may be arranged to move the main valve spool through the agency of the associated pilot valve spool. Alternatively, the or each solenoid may be arranged to move the main valve spool indirectly through mechanical linkages between the main spool valve and the solenoid or associated pilot valve spool. The pressure equalisation means may comprise a channel interconnecting hydraulically the ends of the or each pilot valve spool and the channel may be provided externally or internally of the pilot valve spool.

Thus the present invention provides a valve which is, in effect, a hybrid of a direct acting valve and a pilot-assisted valve, whereby the size and stroke of the main valve can be increased for a given size of solenoid employed with the pilot valve by arranging for the or each solenoid to operate physically (directly or indirectly) on the main valve before the latter is operated entirely hydraulically.

A solenoid-operated, two-stage hydraulic spool valve constructed in accordance with the present invention will now be described in greater detail, by way of example, with reference to the accompanying drawings, in which:-

Figure 1 is somewhat diagrammatic cross-section of the valve shown in association with a load,

Figure 2 is an enlarged view of a portion of the left-hand end of Figure 1, with the top half of the figure showing the components in the same relative position as in Figure 1, and the bottom half showing the components in different relative positions,

Figure 3 is an enlarged view of a portion of the left-hand of Figure 1 showing the components in still further relative positions,

Figure 4 is a circuit diagram equivalent to Figure 1, and

Figure 5 is graph helpful in explaining the operation of the illustrated embodiment.

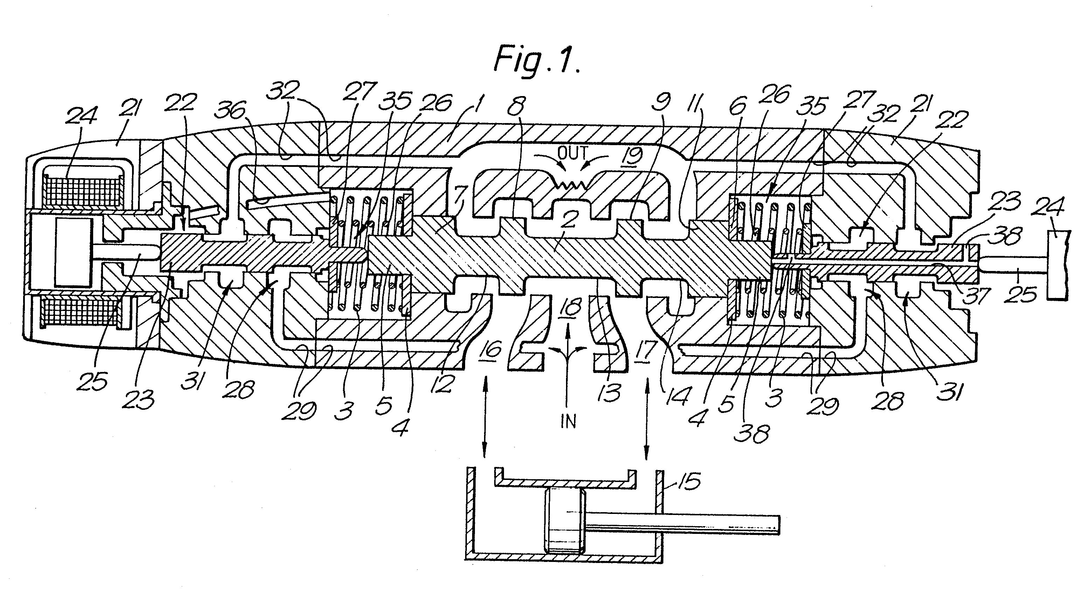

Referring to Figures 1 to 3, the valve is of the open centre type and comprises a main housing or body 1 in which is slidably mounted a spool 2 of the main or second stage of the two-way valve. The main spool 2 is centred in conventional fashion by two compression springs 3 acting on the respective ends of the spool via annular members or washers 4 with respect to which the spool is slidable by way of portions 5 of reduced diameter which extend through the corresponding member. Movement of the members 4 axially of the valve is limited in one direction by a step 6 formed in the housing 1.

The main spool 2 is provided with four lands 7, 8, 9 and 11 between which are three waisted portions 12, 13 and 14, the lands controlling the flow of fluid under pressure to a load, in the form of a double-acting cylinder 15, through one or other of two service ports 16, 17 formed in the housing 1. An inlet or pressure port 18 is also provided in the housing 1, together with a tank loop 19. Since the valve is of the open-centre type, the pressure port 18 is connected to tank via the tank loop 19 when the valve is in the centre or null position of Figure 1 but this only gives rise to a small pressure drop across the valve.

Each end of the main housing 1 threadedly and sealingly receives an end cap 21 which houses a pilot valve 22 comprising a spool 23 controlled by a solenoid 24 having a push pin 25 engageable with one end of the spool. The other end of the spool 23 is engageable with one end of the main spool. A centring spring 26 for each pilot spool 23 operates between the associated annular member or washer 4 of the main valve and a similar member 27 through which the spool 23 is slidable, the member 27 being limited in movement axially of the valve by the inner end of the end cap 21. Each pilot valve 22 is provided with an inlet or pressure port 28 which is connected to the pressure port 18 of the main valve by aligned channels 29 in the corresponding end cap 21 and main housing 1. A tank port 31 is also provided in each pilot valve 22 which port is connected to tank, via aligned channels 32 in the corresponding end cap and main valve housing 1 and via the tank loop 19 of the main valve. What amounts to a service port is provided at the inner end of each pilot valve by way of a land 33 on the spool 23 which, when not in sealing engagement with the corresponding portion 34 of the pilot valve housing or end cap 21, allows fluid under pressure to be admitted to the associated end chamber 35 of the main valve as will be described in greater detail.

The left-hand end cap 21 of Figure 1 shows a channel

0128003

36 extending between the outer end of the spool 23 and the associated end chamber 35 of the main valve and this serves to equalise the pressure across the pilot valve. An alternative form of pressure equalisation means is shown at the right-hand end of Figure 1 in the form of an axial bore 37 through the pilot valve spool 23 which is intersected by radial bores 38 towards respective ends of the spool to ensure that the main bore is not sealed by the engagement of the ends of the spool with the main spool 2 and the solenoid push pin 25, respectively. Alternatively, cross cuts could be provided in the spool end faces.

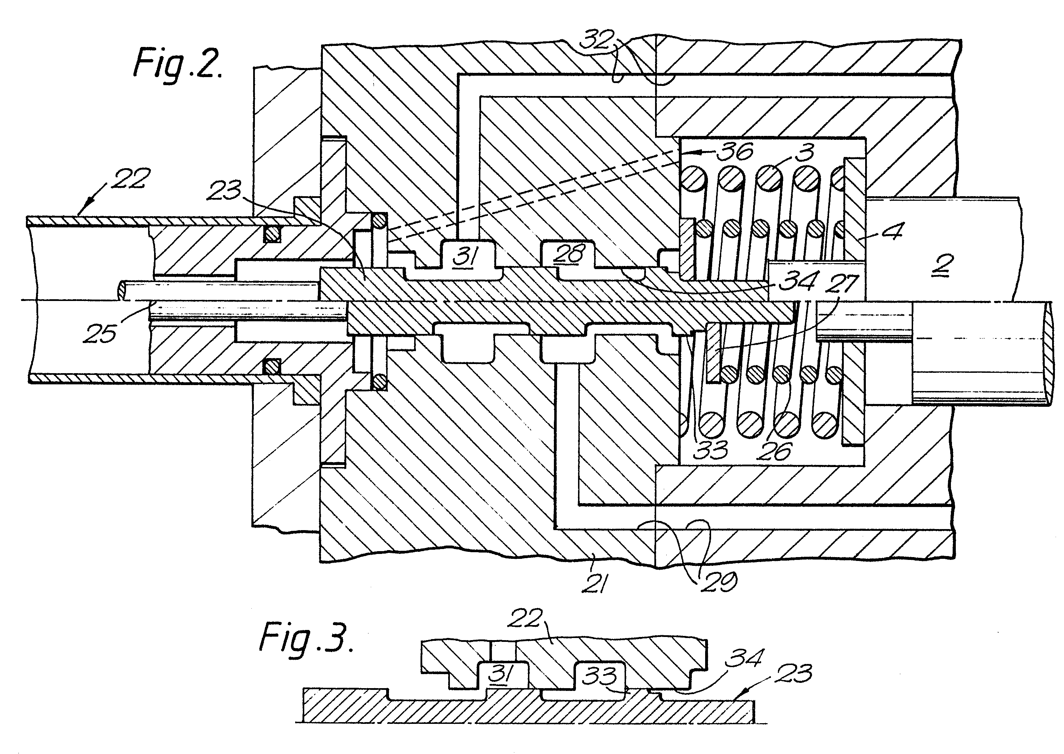

In the null position of Figure 1 and the upper half of Figure 2, the centring springs 3 and 26 operate to centre the main spool 2 and the pilot spools 23, respectively, with fluid under pressure entering the pressure port 18 and being passed to tank as already mentioned. Looking now at the lower half of Figure 2, it will be assumed that the main spool 2 is to be moved to the right, whereupon the drive current to left-hand solenoid 24 is increased. Thus the left-hand solenoid push pin 25 pushes the left-hand pilot spool 23 to the right and in so doing also pushes the main valve spool 2 to the right since the pilot and main spools are in contact with one another at this stage of operation. The centring springs 3 and 26 are designed such that the solenoid 24 is capable of overcoming the forces exerted by both pilot centring springs 26 and one main valve centring spring 3. Thus the solenoid 24 is operative to move both the pilot spool 23 and the main spool 2 effectively without any hydraulic assistance although there may be some small flow of fluid depending on the characteristics of the valve.

As the left-hand pilot spool 23 moves to the right, the land 33 clears the portion 34 of the valve housing or end cap 21 as shown in the lower half of Figure 2, whereupon fluid under pressure from the main valve pressure port 18 is admitted to the left-hand end chamber 35 of the main valve via the channels 29 and pilot pressure port 28. Thus, the pressure fluid so admitted acts on the end of the main valve spool 2 to further its movement to the right, there coming a point when the solenoid 24 is at the end of its stroke so that further movement of the main spool hydraulically breaks the contact between the latter and the left-hand pilot spool 23 as shown in the lower half of Figure 2.

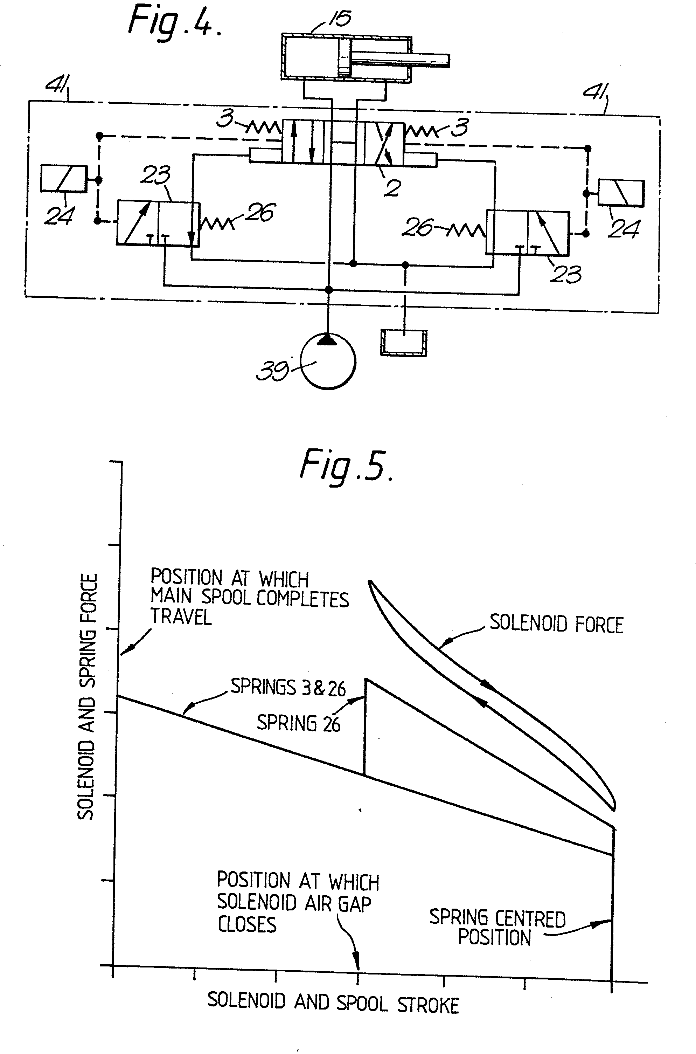

The main spool 2 is designed such that when either one of the solenoids 24 completes its stroke, the interconnections within the valve result in fluid under pressure being directed to one end or other of the load 15 and the resistance of the latter creates a pressure in the system between the pump 39 (Figure 4) and the load, including the pressure port 18. Then, as already described, fluid under pressure is admitted to the appropriate end chamber 35 forcing the main spool 2 to complete its travel. The pressure across each pilot spool 23 is equalised by the channel 36 (or other means) to hold the spool in the position shown in the lower half of Figure 2 under the influence of the solenoid force and the force of the centring spring 26. Figure 3 shows the extreme left-hand position of the left-hand pilot spool 23, the equivalent position being adopted by the right-hand pilot spool on completion of the main spool travel described above.

When the left-hand solenoid 24 is de-energised, the centring spring 26 returns the pilot spool 23 to the null position of Figure 2 (upper half), whereupon the left-hand pilot pressure port 28 is now isolated from the associated main valve end chamber 35 which is thus connected to tank via the channel 36, the pilot tank port 31, channels 32 and tank loop 19. The pilot pressure in the left-hand end chamber 35 of the main valve will then decay and the main spool 2 will be returned to the null or central position by the right-hand centring spring 3.

Figure 4 shows an hydraulic circuit diagram of the valve of Figure 1 with like components ascribed similar reference numerals. The broken lines 41 indicate the mechanical connections between the solenoids 24 and the pilot and main valves which in the embodiment of Figure 1 are direct connections. However, it is possible to have indirect mechanical connections by employing linkages, for example, between the pilot spools or solenoids and the main spool.

Figure 5 is a graph of solenoid and centring spring forces against solenoid and spool strokes useful in appreciating the operation of the embodiment of Figure 1.

The channels 29 associated with the respective spool valves 22 may be fitted with flow control and/or pressure reducing devices.

It will be appreciated from the foregoing description of the illustrated embodiment that the present invention permits the use of a relatively large main spool in a circuit where no residual pressure or pilot pressure is available or desirable and yet allows that spool to be operated by a solenoid which is small enough normally to require the provision of a pilot pressure supply. In the described embodiment the main spool 2 has a diameter of 18mm and the solenoid is of a size normally associated with a spool having a 12mm diameter. The movement of the main spool 2 by the direct action of one or other of the solenoids 24 is arranged to be about 3mm, approximately half of the maximum stroke of the spool.

Instead of using two solenoids 24 and two pilot valve spool 23, one solenoid and spool pair can be replaced by a conventional spring offset arrangement. The pressure equalisation means will be inherent in the spring offset arrangement so that no special provision need be made in this respect.

It will be seen that the present invention combines features of a direct acting valve and a pilot-assisted valve in a highly effective manner without any significant increase in cost.

CLAIMS

1. A solenoid-operated, two-stage hydraulic spool valve comprising pilot valve means and a main valve with the pilot valve means comprising two control devices associated with respective ends of the spool of the main valve, at least one control device comprising a solenoid and a pilot valve spool, characterised in that in use each control device (24) is operable physically to move the main valve spool (2) during an initial portion of the movement of the latter from a null position to an offset position in which hydraulic fluid is passed to a load (15), movement of the main valve spool beyond said initial portion being effected hydraulically on opening of the pilot valve means (22); the hydraulic spool valve further comprising means (36; 37, 38) for equalising the hydraulic pressure across each control device.

2. A valve according to claim 1, characterised in that each control device comprises a solenoid (24, 25) and pilot valve spool (23).

3. A valve according to claim 1 or 2, characterised in that the or each solenoid (24, 25), when energised to move the main valve spool (2), moves the main valve spool through the agency of the associated pilot valve spool (23).

4. A valve according to claim 1 or 2, characterised in that the or each solenoid (24, 25), when energised to move the main valve spool (2), moves the main valve spool indirectly through mechanical linkages between the main spool valve and the solenoid or associated pilot valve spool (23).

5. A valve according to any of the preceding claims, characterised in that the pressure equalisation means comprises a channel (36; 37, 38) interconnecting hydraulically the ends of the or each pilot valve spool (23).

6. A valve according to claim 5, characterised in that the pressure equalisation channel (36) is provided externally of the or each pilot valve spool (23).

7.    A valve according to claim 5, characterised in that the pressure equalisation channel (37, 38) is provided internally of the or each pilot valve spool (23).

8.    A valve according to claim 1, characterised in that the other control device (2) is a spring offset arrangement.

9.    A valve according to any of the preceding claims, characterised in that it is of the open centre type.

Fig.1.

0128003

0128003

Fig.2.

Fig.3.

0128003

*Fig.4.*

3/3

15

41

3

2

23

26

26

23

24

24

39

*Fig.5.*

SOLENOID AND SPRING FORCE

POSITION AT WHICH
MAIN SPOOL COMPLETES
TRAVEL

SOLENOID FORCE

SPRINGS 3 & 26

SPRING 26

POSITION AT WHICH
SOLENOID AIR GAP
CLOSES

SPRING CENTRED
POSITION

SOLENOID AND SPOOL STROKE